# EUROPEAN PATENT APPLICATION

(11) **EP 3 839 845 A1**
(43) Date of publication of application: **23.06.2021**
(21) Application number: 19219121.1
(22) Date of filing: 20.12.2019
(51) Int. Cl.: G06Q 10/06, G06Q 50/12

(54) **METHOD AND SYSTEM FOR SYNCHRONIZING MULTIPLE KITCHEN MACHINES**

(30) Priority: 18.12.2019 PT 2019115998
(71) Applicant: Modelo Continente Hipermercados, S.A., 4464-503 Senhora da Hora (PT)
(72) Inventor: FARIA ROCHA, DUARTE NUNO, 3800-423 AVEIRO (PT)
(74) Representative: do Nascimento Gomes, Rui

(57) **Abstract**

The present application relates to a method and system for controlling the operation of kitchen machines. It is disclosed a new synchronization scheme for controlling a multiplicity of kitchen machines, operating in concert with each other according to a desired purpose. The method and system now proposed aim to achieve a more effective synchronization process in terms of combined operation between kitchen machines and, as a consequence of doing so, reduce error propagation.

## Description

### FIELD OF THE INVENTION

The present application is enclosed in the area of kitchen machines, in particular kitchen machines which are electrically ran/operated, typically comprising a mixing cup in which automatic mixing actions are performed and operating with automatic cooking programs, and relates to a method and system for controlling the operation of multiple kitchen machines. More particularly, the present application describes a synchronizing method and system for controlling a plurality of kitchen machines communicatively coupled to a network.

### PRIOR ART

Solutions exist in the art to control the operation of a multiplicity of kitchen machines, operating in concert with each other. In this context, the patent application EP3206096 B1 discloses a system and method for controlling food processing steps of a multi-function cooking apparatus and food processing steps of remote kitchen machines. For that purpose, it is disclosed a synchronizer scheme in which a control system is incorporated in the cooking apparatus, and is configured to synchronize food processing steps performed by the cooking apparatus with food processing steps performed by the one or more remote kitchen machines. Such scheme forces to a mutual knowledge between the cooking apparatus and all the kitchen machines, which have to be connected to each other in order to exchange synchronization data. A validation component is therefore used to check if the one or more remote kitchen machines are registered with a cooking apparatus in an appliance registry.

The existing solutions, such as the one exemplified herein, are characterized by having a chain synchronization scheme, where synchronization data is exchanged between all devices on the network and are processed locally in one of said devices. This represents a limitation to the synchronization operation itself, not only because it is performed by a non-independent entity but also because due to its organization it becomes more susceptible to error propagation.

The present solution intended to innovatively overcome such issues.

### PROBLEMS TO BE SOLVED

In the view of the limitation of the state of the art, the technology now developed intends to make the kitchen machine synchronization process more effective in terms of combined operation between kitchen machines and, as a consequence of doing so, reduce error propagation.

### SUMMARY OF THE INVENTION

It is therefore an object of the present application to describe a new synchronization scheme for controlling a multiplicity of kitchen machines, operating in concert with each other according to a desired purpose.

In an advantageous configuration of the technology developed, it is proposed a method for synchronizing multiple kitchen machines comprised by the following steps:
i. Selection of at least one automatic cooking program to be executed by a plurality of kitchen machines communicatively coupled to a network;
ii. Election of kitchen machines within the network, by a remote centralized server communicatively coupled to said network;
iii. Generation of at least one cluster of kitchen machines, by the remote centralized server, from the set of kitchen machines elected, wherein a cluster is comprised by at least one kitchen machine;
iv. Programming, by the remote centralized server, of a selected automatic cooking program in a cluster of kitchen machines;
v. Execution of a periodic cluster synchronization routine by the remote centralized server.

In another advantageous mode of the technology developed, it is proposed a system for synchronizing multiple kitchen machines, comprising:
a plurality of kitchen machines communicatively coupled to a network;
a remote centralized server communicatively coupled to the network, and comprising a configuration manager, adapted to be invokable by a client device that is communicatively coupled to the network, and comprising processing means configured to execute the synchronizing method developed according to at least one automatic cooking program selected for execution by the client device.

### DESCRIPTION OF FIGURES

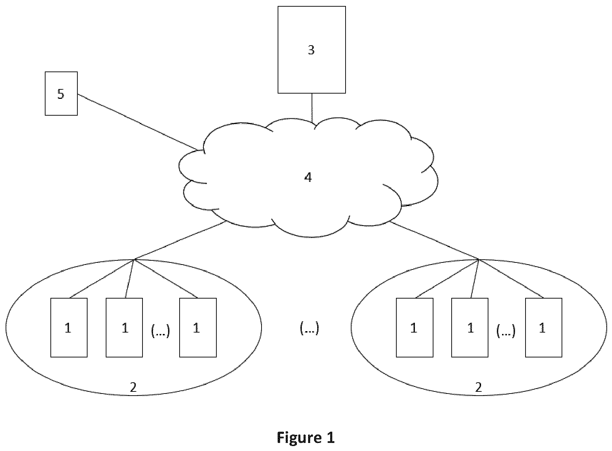

Figure 1 - representation of an embodiment of the system for synchronizing multiple kitchen machines. The reference signals represent:
1 - kitchen machine;
2 - cluster of kitchen machines;
3 - remote centralized server;
4 - network;
5 - client device.

### DETAILED DESCRIPTION

The more general and advantageous configurations of the present invention are described in the Summary of the invention. Such configurations are detailed below in accordance with other advantageous and/or preferred embodiments of implementation of the present invention.

The present application describes a method and system for synchronizing kitchen machines. In the context of the present application, a kitchen machine is an apparatus electrically ran and being comprised by i) a mixing cup, ii) mixing means provided in the mixing cup, iii) a base station suitable for coupling of the mixing cup and which thereby is able to provide motion to the mixing means, iv) heating/cooling means, v) means for automatically measuring weight or volume of food products placed into the mixing cup and vi) a processing unit comprising processing means programmed to operate the kitchen machine hardware elements i) to v) according to automatic cooking programs. Each kitchen machine can be provided with different technical specification for each of said hardware elements.

An automatic cooking program is an operative routine to be executed by a kitchen machine and it is comprised by an ordered set of operative instructions to be performed by the kitchen machine hardware elements i) to v). For that purpose, each automatic cooking program has assigned a list of operational requirements associated to working parameters of the hardware elements constituents of the kitchen machine. The configuration of these working parameters may vary depending on the automatic cooking program selected for execution. The selection of automatic cooking programs is performed by a client device, which can be a kitchen machine itself or an external entity to the kitchen machine, such as a smartphone. A database of automatic cooking programs can be stored in memory means of a kitchen machine's processing unit. Alternatively, said database is stored in an external server database, connected to the kitchen machine by means of a bidirectional communication link.

In a preferred embodiment of the technology now developed, it is proposed a method for synchronizing multiple kitchen machines. Said method is defined by an ordered set of steps.

In a first step of the method proposed is performed the selection of at least one automatic cooking program to be executed by a plurality of a network communicatively coupled to a network. The present method ensures a correct synchronization between a multiplicity of kitchen machines working independently from one another - each one running a different automatic cooking program - or working together - executing the same automatic cooking program.

In a second step of the method, a remote centralized server elects a set of kitchen machines within the network. This step represents a first stage of analysis which could result in disregarding kitchen machines which are not compatible for executing any of the automatic cooking programs selected for execution. Therefore, all the synchronization procedure will be applied to elected kitchen machines. Depending on the specificities of the kitchen machines in the network and on the list of requirements of the selected automatic cooking program all the kitchen machines of the network can be elected.

In a third step of the method proposed, the remote centralized server, generates at least one cluster of kitchen machines, from the set of elected kitchen machines. In this context, a cluster is an entity fiction that is used to group kitchen machines according to its technical specifications. Consequently, a cluster is formed by at least one kitchen machine.

In a fourth step of the method proposed, the remote centralized server is responsible for assigning the execution of an automatic cooking program to a certain cluster. Particularly, the centralized server is configured to program a selected automatic cooking program in the processing unit of the kitchen machines of a cluster. The discretion in assigning an automatic cooking program to a given cluster is based on the technical specifications of each kitchen machine forming the cluster.

Finally, in a fifth step of the method proposed, the remote centralized server executes periodically a cluster synchronization routine, in order to ensure a correct operation during the execution period of the selected automatic cooking programs.

In a particular embodiment of the method, the step of electing kitchen machines comprises an ordered set of steps.

The first step involves transmitting a service status request to all kitchen machines in the network, by the remote centralized server;
The second step involves sending a status message to the remote centralized server by a kitchen machine. In this regard, a status message comprises operative data related to technical specification the kitchen machine, such as the operative status of the kitchen machine, i.e. active or inactive, the power levels, driving power and speed rotation's ranges of operation of the mixing means, the maximum and minimum temperatures of the heating/cooling means or the total volume of the mixing cup.

The third step involves processing the status message of a kitchen machine by the remote centralized server in order to determine if the respective kitchen machine is compatible with the at least one automatic cooking program selected for execution. Particularly, the step of determining if a kitchen machine is compatible to execute an automatic cooking program comprises comparing the status message of said kitchen machine with a list of operational requirements assigned to the automatic cooking program. Said list of operational requirements of an automatic cooking program comprise operational data related to the power level, driving power and speed rotation of the mixing means, heating and/or cooling temperatures of the heating/cooling means, and maximum volume required for the mixing cup.

Finally, the fourth step involves marking a kitchen machine as elected if it is compatible with the at least one automatic cooking program selected for execution.

In another particular embodiment of the method, the step of programming a cluster to execute a selected automatic cooking program is further comprised by an ordered set of steps:
The first step involves parsing the selected automatic cooking program. Said automatic cooking program being comprised by an ordered set of operative instructions to be performed by the kitchen machine's hardware elements i) to v).

The second step is based on the parsing stage developed in the first step and involves the creation of sub-sets of operative instructions, each sub-set comprising a list of operation requirements, to be scheduled to run on the kitchen machines' processing unit of a cluster. The first two steps are implemented by the remote centralized server exercising a discretion based on the number and on the technical specifications of each kitchen machine of the cluster.

Finally, the third step involves programming each sub-set of operative instructions in the processing unit of the kitchen machines of a cluster.

In another embodiment of the method, the cluster synchronization routine is further comprised by an ordered set of steps:
The first step involves initiating a synchronization routine from the kitchen machines of a given cluster with the remote centralized server. Said synchronization routine encompasses determining at the remote centralized server the synchronization status of each kitchen machine of the cluster. For that, each kitchen machine executes a kitchen machine's synchronization routine to gather an operational data record to be sent to the remote centralized server. The operational data record of a kitchen machine comprises the following operative parameters: operating time, duty-cycle, power consumption levels, driving power and speed rotation of the mixing means and heating or cooling temperatures of the heating/cooling means. The remote centralized server executes a remote centralized server's synchronization routine to process the operational data record of all the kitchen machines of the cluster, in order to generate synchronization data to be returned to each kitchen machine of the cluster. Finally, each kitchen machine executes a kitchen machine's synchronization routine to process the synchronization data sent by the remote centralized server. In a particular embodiment, the remote centralized server's synchronization routine is configured to:
- generate a cluster synchronization record for each cluster of kitchen machines, by comparing the operational data record of each kitchen machine of a cluster with the respective list of operational requirements of the sub-set of operative instructions programmed in each one;
- process the cluster synchronization records of all the clusters of the network as a function of optimizing overall operating time; such optimization being performed to implement:
   - a parallel scheme of operation, wherein the clusters of the network are synchronized to end the operation of its kitchen machines at the same time; or
   - a sequential scheme of operation, wherein the clusters of the network are synchronized to finish the operation of its kitchen machines with a predefined time-difference between each cluster;
- generate synchronization data to reprogram the operative parameters of each kitchen machine of a cluster.

In another preferred embodiment of the technology now developed, it is proposed a system for synchronizing multiple kitchen machines, comprising:
a plurality of kitchen machines communicatively coupled to a network;
a remote centralized server communicatively coupled to the network, and comprising a configuration manager, adapted to be invokable by a client device that is communicatively coupled to the network, and comprising processing means configured to execute the method described above according to at least one automatic cooking program selected for execution by the client device.

In an alternative embodiment of the system, the network is a local or wide area network.

In another alternative embodiment of the system, the client device is a kitchen machine. Alternatively, in another embodiment of the system, the client device is a personal computer or a smartphone. According to this embodiment, the system is further comprised by an engineering tool adapted to create an XML version of the programming code, and configured to run on the client device in a network-interfacing application.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. Method for synchronizing multiple kitchen machines, such kitchen machines being electrically ran and comprising i) a mixing cup, ii) mixing means provided in the mixing cup, iii) a base station suitable for coupling of the mixing cup and which thereby is able to provide motion to the mixing means, iv) heating/cooling means, v) means for automatically measuring weight or volume of food products placed into the mixing cup and vi) a processing unit comprising processing means programmed to operate the kitchen machine hardware elements i) to v) according to automatic cooking programs; the method is **characterized by** comprising the following steps:
i. Selection of at least one automatic cooking program to be executed by a plurality of kitchen machines communicatively coupled to a network;
ii. Election of kitchen machines within the network, by a remote centralized server communicatively coupled to said network;
iii. Generation of at least one cluster of kitchen machines, by the remote centralized server, from the set of kitchen machines elected, wherein a cluster is comprised by at least one kitchen machine;
iv. Programming, by the remote centralized server, of a selected automatic cooking program in the kitchen machines of a cluster;
v. Execution of a periodic cluster synchronization routine by the remote centralized server.

2. Method according to claim 1, wherein the selection of an automatic cooking program is performed by a client device communicatively coupled to the network; said client device is a personal processing device, such as a smartphone, or a kitchen machine.

3. Method according to any of the previous claims wherein the step of electing kitchen machines within the network comprises:
i. transmitting a service status request to all kitchen machines in the network, by the remote centralized server;
ii. sending a status message to the remote centralized server by a kitchen machine;
iii. processing the status message of a kitchen machine by the remote centralized server in order to determine if the respective kitchen machine is compatible with the at least one automatic cooking program selected for execution;
iv. marking a kitchen machine as elected if it is compatible with the at least one automatic cooking program selected for execution.

4. Method according to claim 3 wherein the status message comprises operative data related to technical specification the kitchen machine:
- The operative status of the kitchen machine, i.e. active or inactive;
- power levels, driving power and speed rotation's ranges of operation of the mixing means;
- maximum and minimum temperatures of the heating/cooling means;
- total volume of the mixing cup.

5. Method according to any of the previous claims 3 or 4, wherein the step of determining if a kitchen machine is compatible to execute an automatic cooking program comprises comparing the status message of said kitchen machine with a list of operational requirements assigned to the automatic cooking program; said list of operational requirements of an automatic cooking program comprising operational data related to:
- power level, driving power and speed rotation of the mixing means;
- heating and/or cooling temperatures of the heating/cooling means;
- maximum volume required for the mixing cup.

6. Method according to any of the previous claims, wherein the step of programming a cluster to execute a selected automatic cooking program, comprises:
i. Parsing the automatic cooking program; said automatic cooking program comprising an ordered set of operative instructions to be performed by the kitchen machine's hardware elements i) to v);
ii. Creating sub-sets of operative instructions to be scheduled to run on the kitchen machines' processing unit of a cluster;
iii. Programming each sub-set of operative instructions in the processing unit of the kitchen machines of a cluster.

7. Method according to claims 5 and 6, wherein a sub-set of operative instructions comprises a list of operational requirements; the sub-sets of operative instructions being generated as a function of the technical specifications and the number of kitchen machines of the cluster.

8. Method according to any of the previous claims, wherein the cluster synchronization routine comprises the steps of:
i. Initiating a synchronization routine from the kitchen machines of a given cluster with the remote centralized server;
ii. Determining at the remote centralized server the synchronization status of each kitchen machine of the cluster;
iii. Executing a kitchen machine's synchronization routine to gather an operational data record to be sent to the remote centralized server;
iv. Executing a remote centralized server's synchronization routine to process the operational data record of all the kitchen machines of the cluster, wherein the remote centralized server's synchronization routine is programmed to generate synchronization data to be returned to each kitchen machine of the cluster;
v. Executing a kitchen machine's synchronization routine to process the synchronization data sent by the remote centralized server.

9. Method according to claim 8, wherein the operational data record of a kitchen machine comprises the following operative parameters: operating time, duty-cycle, power consumption levels, driving power and speed rotation of the mixing means and heating or cooling temperatures of the heating/cooling means.

10. Method according to claims 7 and 9, wherein the remote centralized server's synchronization routine is configured to:
i. generate a cluster synchronization record for each cluster of kitchen machines, by comparing the operational data record of each kitchen machine of a cluster with the respective list of operational requirements of the sub-set of operative instructions programmed in each one;
ii. process the cluster synchronization records of all the clusters of the network as a function of optimizing overall operating time; such optimization being performed to implement:
- a parallel scheme of operation, wherein the clusters of the network are synchronized to end the operation of its kitchen machines at the same time; or
- a sequential scheme of operation, wherein the clusters of the network are synchronized to finish the operation of its kitchen machines with a predefined time-difference between each cluster;
iii. generate synchronization data to reprogram the operative parameters of each kitchen machine of a cluster.

11. System for synchronizing multiple kitchen machines, such kitchen machines being electrically ran and comprising i) a mixing cup, ii) mixing means provided in the mixing cup, iii) a base station suitable for coupling of the mixing cup and which thereby is able to provide motion to the mixing means, iv) heating/cooling means, v) means for automatically measuring weight or volume of food products placed into the mixing cup, , vi) a processing unit comprising processing means programmed to operate the kitchen machine hardware elements i) to v) according to automatic cooking programs; the system being comprised by:
a plurality of kitchen machines communicatively coupled to a network;
a remote centralized server communicatively coupled to the network, and comprising a configuration manager, adapted to be invokable by a client device that is communicatively coupled to the network, and comprising processing means configured to execute the method of claims 1 to 10 according to at least one automatic cooking program selected for execution by the client device.

12. System according to claim 11, wherein the network is a local or wide area network.

13. System according to any of the previous claims 11 or 12, wherein the client device is a kitchen machine.

14. System according to any of the previous claims 11 or 12, wherein the client device is a personal computer or a smartphone.

15. System according to claim 14, further comprising an engineering tool adapted to create an XML version of the programming code, and configured to run on the client device in a network-interfacing application.
